## Europäisches Patentamt
## European Patent Office
## Office européen des brevets

(19)

(11) Veröffentlichungsnummer: **0 046 519**
**B1**

(12)

# EUROPÄISCHE PATENTSCHRIFT

(45) Veröffentlichungstag der Patentschrift:
14.12.83

(51) Int. Cl.³: **E 04 B 5/48,** F 24 D 3/00,
F 16 L 3/00

(21) Anmeldenummer: 81106019.3

(22) Anmeldetag: 31.07.81

(54) Trägermatte für Heizelemente einer Fussbodenheizung.

(30) Priorität: 22.08.80 DE 3031652

(43) Veröffentlichungstag der Anmeldung:
03.03.82 Patentblatt 82/9

(45) Bekanntmachung des Hinweises auf die Patenterteilung:
14.12.83 Patentblatt 83/50

(84) Benannte Vertragsstaaten:
AT BE CH FR GB IT LI LU NL SE

(56) Entgegenhaltungen:
DE - A - 2 807 446
DE - U - 8 030 468

(73) Patentinhaber: TA ROKAL GmbH, Neckarstrasse 37,
D-4330 Mühlheim/Ruhr (DE)

(72) Erfinder: Heger, Wolfram H., Ostenallee 82,
D-4700 Hamm (DE)
Erfinder: Knöchelmann, Heinz, Waldweg 9,
D-4224 Hünxe-Bruckhausen (DE)

(74) Vertreter: Bergen, Klaus, Dipl.-Ing. et al, Patentanwälte
Dr.-Ing. Reimar König Dipl.-Ing. Klaus Bergen
Wilhelm-Tell-Strasse 14 Postfach 260162,
D-4000 Düsseldorf 1 (DE)

Trägermatte für Heizelemente einer Fussbodenheizung

Die Erfindung betrifft eine aus sich kreuzenden längs- und querverlaufenden Mattenstäben bestehende Trägermatte, an der mittels zumindest einer Schelle Heizelemente einer in eine auf eine Bodenfläche aufzubringende Estrichschicht einzubettenden Fussbodenheizung verbunden werden.

Eine derartige Trägermatte ist aus der DE-A Nr. 2807446 bekannt.

Bei der Verlegung von Fussbodenheizungen müssen die Heizelemente vor dem Auftragen des Estrichs fixiert werden, damit sie innerhalb des Estrichs die gewünschte Lage erhalten. Beispielsweise können die Heizelemente mit Draht an einer entweder unmittelbar oder über Abstandhalter auf die Bodenfläche aufgelegten Trägermatte, beispielsweise aus Baustahl, befestigt werden, die nach dem Auftragen des Estrichs in dessen Innerem liegt.

Vielfach werden heute die Heizelemente auch in sich auf der Bodenfläche oder einer auf dieser liegenden Isolierschicht abstützenden Rohrschellen eingesetzt, die es in vielfältigen Ausführungsformen gibt. Damit sich die Heizelemente beim Auftragen des Estrichs seitlich nicht verschieben können, ist entweder zusätzlich eine Drahtverbindung mit der Trägermatte erforderlich, oder die Rohrschellen sind so ausgebildet, dass sie sich an den Mattenstäben befestigen lassen. In jedem Fall müssen die Heizelemente bzw. Rohrschellen in verhältnismässig geringen Abständen mit der Trägermatte verbunden sein, um die Heizelemente gegen ein Verschieben sicher zu fixieren.

Jedoch erweist sich die Lagefixierung der Heizelemente mit der Drahtverbindung als sehr umständlich und zeitraubend, während bei der Verwendung von Rohrschellen die Fixierung je nach Befestigungsart der Schelle zwar erleichtert werden kann, aber dafür verursachen die Rohrschellen zusätzliche Kosten bei der Beschaffung und Lagerhaltung, und zudem erfordert das Anbringen der Schellen Zeit.

Der Erfindung liegt die Aufgabe zugrunde, eine Trägermatte zu schaffen, die die Fixierung der Heizelemente wesentlich vereinfacht.

Diese Aufgabe wird bei einer Trägermatte der eingangs erwähnten Art erfindungsgemäss dadurch gelöst, dass mindestens ein längs- und/oder Querstab zumindest in einem Teilbereich selbst als jeweils mindestens eine Schelle für ein Heizelement ausgebildet ist (sind). Bei dieser Trägermatte lassen sich die Heizelemente ohne gesonderte Schellen oder Drahtverbindungen allein durch Einlegen in die schellenartig geformten Mattenstäbe mit der Trägermatte verbinden, die zugleich für eine optimale Lagefixierung der beiden Teile zueinander sorgt, so dass sie sich nicht gegenseitig horizontal verschieben können. Zudem lassen sich die Heizelemente ausgesprochen einfach und daher wesentlich schneller als bisher verlegen, indem nach dem Auslegen der Matte auf der zu beheizenden Fläche das Rohr direkt in die Matte eingetreten werden kann.

In Ausbildung der Erfindung kann mindestens eine Schelle vorzugsweise jeweils etwa in der Mitte des sich zwischen den benachbarten Kreuzungspunkten der Längs- und Querstäbe erstreckenden Mattenstabes liegen, so dass sich die Heizelemente in einem von der Trägermatte vorgegebenen Rasterabstand verlegen lassen.

Weiterhin ist der durch die freien Enden zweier, jeweils eine Schelle formender, miteinander verbundener Schellenschenkel gebildete Einrastspalt kleiner als der Aussendurchmesser des zu haltenden Heizelements. Dies erleichtert das Einlegen des Heizelementes, denn es muss dann lediglich senkrecht zu seiner Längsachse in die Schelle hineingedrückt werden. Zugleich wird ein Herausrutschen aus der Schelle zuverlässig vermieden, ohne dass der Einrastspalt durch eine Verbindung der Schellenschenkel geschlossen werden müsste.

Ferner kann der jeweilige Mattenstab im Bereich des Einrastspaltes gerundet in die Schellenschenkel übergehen, so dass das Eindrücken der Heizelemente zwischen die Schellenschenkel nicht nur leicht, sondern auch ohne Beschädigung erfolgen kann.

Nach einem weiteren Merkmal der Erfindung wird vorgeschlagen, dass die Aufnahmeöffnung der Schelle kreisförmig und ihr Durchmesser etwas kleiner als der Aussendurchmesser des zu haltenden, vorzugsweise rohrförmigen Heizelementes ist. Auf diese Weise umgreifen die Schellenschenkel den Mantel des Heizelementes mit Vorspannung, so dass es spielfrei und somit gegen eine Lageänderung beim Auftragen des Estrichs sicher gehalten wird.

Gemäss der Erfindung kann des weiteren die mit der Längsachse des in die Schelle eingelegten Heizelements fluchtende Schellenachse senkrecht zu der Längsachse des als Schelle ausgebildeten Mattenstabes verlaufen. Beispielsweise sind die Schellenachsen der Längs- und/oder Querstäbe auf unterschiedlichen, zu der Ebene der Kreuzungspunkte der Längs- und Querstäbe parallelen Ebenen angeordnet, so dass an der Trägermatte sich kreuzende Heizelemente befestigt werden können. Um eine Trägermatte mit möglichst geringer Dicke in bezug auf den aufzutragenden Estrich zu erhalten, können die Schellenachsen der Längs- und Querstäbe aber auch in derselben Ebene liegen. Damit wird auch erreicht, dass die Matte in besonderen Anwendungsfällen nur in der Zugbelastungszone des Estrichs zu liegen kommt. Schliesslich können die Schellenachsen der Längs- und Querstäbe zusätzlich noch jeweils miteinander fluchten, so dass die verlängerten Schellenachsen ein dem Mattenstabraster entsprechendes, zu diesem jedoch versetztes Raster bilden. Bei einer derartigen Trägermatte lassen sich die Heizelemente ohne Schwierigkeit parallel und in jedem gewünschten Abstand innerhalb des durch die Anordnung der Schellen vorgegebenen Rasters verlegen.

In bevorzugter Ausbildung der Erfindung kann der Mattenstab von der Ebene der Kreuzungspunkte schräg zu einer parallelen Ebene verlaufen, in der er in die Schellenschenkel übergeht, und die Schellenschenkel ragen aus der parallelen Ebene im Bereich ihrer Verbindung miteinander bis höchstens zur Ebene der Kreuzungspunkte zurück. An dem durchgehenden Mattenstab der Trägermatte lassen sich somit Schellen in gewünschter Zahl ausformen, ohne dass er Mattenstab durchtrennt oder aus einzelnen Teilen zusammengesetzt werden müsste. Weiterhin können in die längs- und querverlaufenden Mattenstäbe der vorzugsweise aus Baustahl bestehenden Trägermatte bereits vor dem Zusammenfügen zur Trägermatte Schellen eingeformt werden.

Die Erfindung wird nachfolgend anhand eines in der Zeichnung dargestellten Ausführungsbeispiels näher erläutert. In der Zeichnung zeigen:

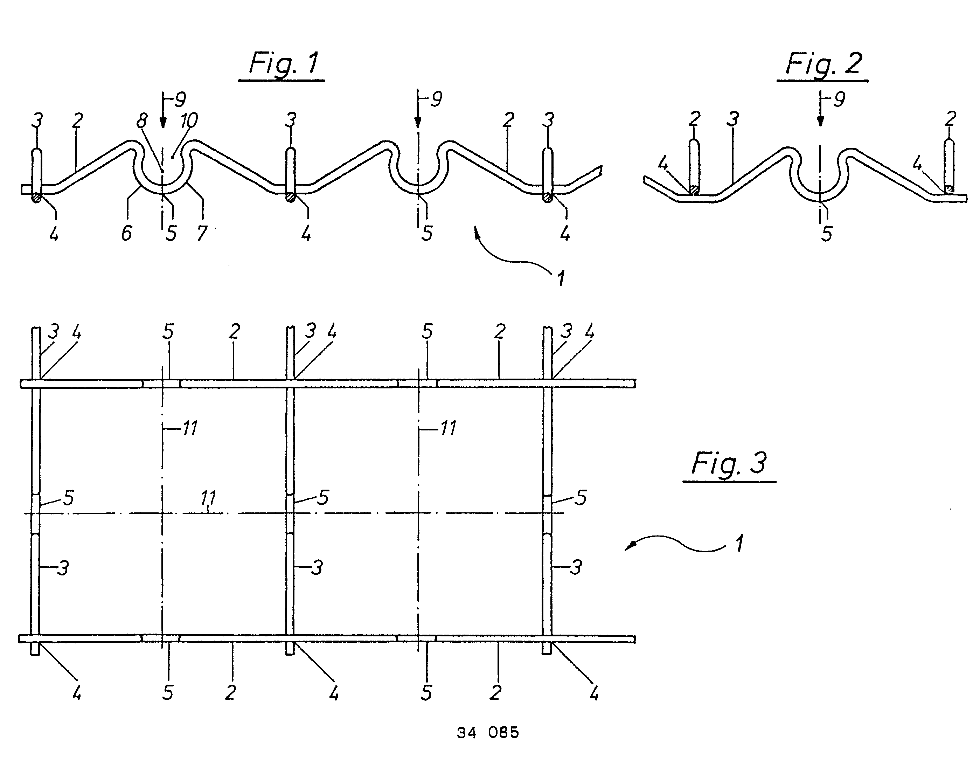

Fig. 1 eine Trägermatte in Seitenansicht;

Fig. 2 eine dazu senkrechte Seitenansicht der Trägermatte gemäss Fig. 1, und

Fig. 3 die Trägermatte gemäss Fig. 1 in Draufsicht.

Bei einer Trägermatte 1 aus Baustahl mit sich kreuzenden Längsstäben 2 und Querstäben 3 sind sämtliche, sich zwischen benachbarten Kreuzungspunkten 4 erstreckenden Mattenstäbe 2, 3 in ihrem mittleren Bereich als Schelle 5 ausgebildet.

Diese Schellen 5 bestehen aus je zwei miteinander verbundenen Schellenschenkeln 6, 7, die eine kreisförmige Aufnahmeöffnung 8 für ein — in der Zeichnung nicht dargestelltes — zu haltendes, vorzugsweise rohrförmiges Heizelement umgreifen. Zwischen den Schellenschenkeln 6, 7 liegt in der mit dem Pfeil 9 angegebenen Einbaurichtung für das Heizelement ein Einrastspalt 10, der kleiner als der Aussendurchmesser des einzusetzenden Heizelementes ist.

Die Mattenstäbe 2, 3 verlaufen von der Ebene, in der die Kreuzungspunkte 4 liegen, schräg bis zu einer zu dieser Ebene parallelen Ebene, in der die Mattenstäbe im Bereich der Einrastspalten 10 gerundet in die Schellenschenkel 6, 7 übergehen. Von der parallelen Ebene ragen die Schellenschenkel bis zu der Ebene der Kreuzungspunkte 4 zurück und sind dort miteinander verbunden. Die Längsachse des in die Schelle eingelegten Heizelements fluchtet mit der Schellenachse 11, die senkrecht zu der Längsachse des als Schelle ausgebildeten Mattenstabes 2, 3 verläuft. Die Schellenachsen 11 der Längsstäbe 2 und Querstäbe 3 liegen beim dargestellten Ausführungsbeispiel in derselben Ebene und fluchten jeweils miteinander.

Die Trägermatte kann entweder direkt mit den Kreuzungspunkten auf einer Bodenfläche oder auf Abstandhaltern oberhalb der Bodenfläche liegen. Damit auch bei mehreren nebeneinanderliegenden Trägermatten die Schellenachsen für eine rasterartige Verlegung der Heizelemente miteinander fluchten, können die freien Enden der gegenüberliegenden Mattenstäbe nebeneinanderliegender Trägermatten über Kammhülsen miteinander verbunden sein. Die anschliessend in die Schellen der Trägermatte eingelegten bzw. eingerasteten Heizelemente der Fussbodenheizung sind in diesen Schellen gegen Verschieben, insbesondere während des nachfolgenden Auftragens des Estrichs sicher fixiert.

**Patentansprüche**

1. Aus sich kreuzenden längs- und querverlaufenden Mattenstäben (2, 3) bestehende Trägermatte (1), an der mittels zumindest einer Schelle (5) Heizelemente einer in eine auf eine Bodenfläche aufzubringende Estrichschicht einzubettenden Fussbodenheizung verbunden werden, dadurch gekennzeichnet, dass mindestens ein Längsstab (2) und/oder Querstab (3) zumindest in einem Teilbereich selbst als jeweils mindestens eine Schelle (5) für ein Heizelement ausgebildet ist (sind).

2. Trägermatte nach Anspruch 1, dadurch gekennzeichnet, dass mindestens eine Schelle (5) jeweils zwischen benachbarten Kreuzungspunkten (4) der Längsstäbe (2) und Querstäbe (3) liegt.

3. Trägermatte nach Anspruch 2, dadurch gekennzeichnet, dass die Schelle (5) jeweils etwa in der Mitte des sich zwischen den benachbarten Kreuzungspunkten (4) erstreckenden Mattenstabes (2, 3) liegt.

4. Trägermatte nach einem oder mehreren der Ansprüche 1 bis 3, dadurch gekennzeichnet, dass der durch die freien Enden zweier, jeweils eine Schelle (5) formender, miteinander verbundener Schellenschenkel (6, 7) gebildete Einrastspalt (10) kleiner als der Aussendurchmesser des zu haltenden Heizelements ist.

5. Trägermatte nach Anspruch 4, dadurch gekennzeichnet, dass der Mattenstab (2, 3) im Bereich des Einrastspalts (10) gerundet in die Schellenschenkel (6, 7) übergeht.

6. Trägermatte nach einem der Ansprüche 4 oder 5, dadurch gekennzeichnet, dass die Aufnahmeöffnung (8) der Schelle (5) kreisförmig und ihr Durchmesser etwas kleiner als der Aussendurchmesser des zu haltenden, vorzugsweise rohrförmigen Heizelementes ist.

7. Trägermatte nach einem oder mehreren der Ansprüche 1 bis 6, dadurch gekennzeichnet, dass die mit der Längsachse des in die Schelle (5) eingelegten Heizelementes fluchtende Schellenachse (11) senkrecht zu der Längsachse des als Schelle (5) ausgebildeten Mattenstabes (2, 3) verläuft.

8. Trägermatte nach Anspruch 7, dadurch gekennzeichnet, dass die Schellenachsen (11) der Längs- (2) und/oder Querstäbe (3) jeweils auf unterschiedlichen, zu der Ebene der Kreuzungspunkte (4) der Längs- (2) und Querstäbe (3) parallelen Ebenen angeordnet sind.

9. Trägermatte nach Anspruch 7, dadurch gekennzeichnet, dass die Schellenachsen (11) der Längsstäbe (2) und Querstäbe (3) auf derselben Ebene liegen.

10. Trägermatte nach einem oder mehreren der Ansprüche 7 bis 9, dadurch gekennzeichnet, dass die Schellenachsen (11) der Längsstäbe (2) und/oder der Querstäbe (3) miteinander fluchten.

11. Trägermatte nach einem oder mehreren der Ansprüche 7 bis 10, dadurch gekennzeichnet, dass der Mattenstab (2, 3) von der Ebene der Kreuzungspunkte (4) schräg zu einer parallelen Ebene verläuft, in der er (2, 3) in die Schellenschenkel (6, 7) übergeht, und dass die Schellenschenkel (6, 7) aus der parallelen Ebene im Bereich ihrer Verbindung miteinander bis höchstens zur Ebene der Kreuzungspunkte (4) zurückkragen.

12. Trägermatte nach einem oder mehreren der Ansprüche 1 bis 11, gekennzeichnet durch eine Baustahlmatte als Trägermatte (1).

## Revendications

1. Treillis porteur (1) composé de barres longitudinales et transversales (2, 3) se croisant, auquel sont fixés, au moyen d'au moins un collier (5), des éléments chauffants d'un chauffage par le plancher à noyer dans la chape à poser sur une surface de plancher, caractérisé en ce qu'au moins une barre longitudinale (2) et/ou une barre transversale (3) est (sont), au moins dans un tronçon, conçue(s) chacune de telle sorte qu'elle(s)-même(s) forme(nt) un collier (5) pour un élément chauffant.

2. Treillis porteur selon la revendication 1, caractérisé en ce qu'au moins un collier (5) se trouve entre des points de croisement voisins (4) des barres longitudinales (2) et transversales (3).

3. Treillis porteur selon la revendication 2, caractérisé en ce que le collier (5) se trouve à peu près au milieu de la barre de treillis (2, 3) s'étendant entre les points de croisement voisins (4).

4. Treillis porteur selon une ou plusieurs des revendications 1 à 3, caractérisé en ce que la fente d'encliquetage (10), formée par les extrémités libres de deux branches de collier (6, 7) reliées l'une à l'autre en formant un collier (5), est plus petite que le diamètre extérieur de l'élément chauffant à retenir.

5. Treillis porteur selon la revendication 4, caractérisé en ce que dans le champ de la fente d'encliquetage (10) la barre de treillis (2, 3) se raccorde par des arrondis aux branches de collier (6, 7).

6. Treillis porteur selon l'une des revendications 4 ou 5, caractérisé en ce que l'ouverture de réception (8) du collier (5) a une forme circulaire, son diamètre étant un peu plus petit que le diamètre extérieur de l'élément chauffant, de préférence tubulaire, à retenir.

7. Treillis porteur selon une ou plusieurs des revendications 1 à 6, caractérisé en ce que l'axe de collier (11) situé dans le prolongement de l'axe longitudinal de l'élément chauffant introduit dans le collier (5) est orienté perpendiculairement à l'axe longitudinal de la barre de treillis (2, 3) conçue comme collier (5).

8. Treillis porteur selon la revendication 7, caractérisé en ce que les axes de collier (11) des barres longitudinales (2) et/ou transversales (3) sont disposés dans des plans différents, parallèles au plan des points de croisement (4) des barres longitudinales (2) et transversales (3).

9. Treillis porteur selon la revendication 7, caractérisé en ce que les axes de collier (11) des barres longitudinales (2) et des barres transversales (3) sont dans le même plan.

10. Treillis porteur selon la revendication 7, caractérisé en ce que les axes de collier (11) des barres longitudinales (2) et/ou des barres transversales (3) sont dans le prolongement les uns des autres.

11. Treillis porteur selon une ou plusieurs des revendications 7 à 10, caractérisé en ce que la barre de treillis (2, 3) suit une trajectoire inclinée depuis le plan des points de croisement (4) jusqu'à un plan parallèle dans lequel ladite barre de treillis (2, 3) devient les branches de collier (6, 7), et en ce que les branches de collier (6, 7) sortant du plan parallèle sont, dans la partie de leur jonction l'une à l'autre, ramenées en arrière au maximum jusqu'au plan des points de croisement (4).

12. Treillis porteur selon une ou plusieurs des revendications 1 à 11, caractérisé en ce que le treillis porteur (1) est un treillis en acier de construction.

## Claims

1. Supporting mat (1), consisting of mutually crossing, longitudinally and transversaly oriented mat bars (2, 3), to which mat heating elements of an underfloor heating system to be embedded in a floor finishing layer to be applied onto a floor surface are connected by means of at least one saddle (5), characterized in that at least one longitudinal bar (2) and/or transverse bar (3) is (are) itself (themselves) formed, in at least one partial region, as at least one saddle (5) each for a heating element.

2. Supporting mat according to claim 1, characterized in that at least one saddle (5) lies between adjacent crossing points (4) of the longitudinal bars (2) and transverse bars (3).

3. Supporting mat according to claim 2, characterized in that the saddle (5) lies approximately in the centre of the mat bar (2, 3) extending between the adjacent crossing points (4).

4. Supporting mat according to one or more of claims 1 to 3, characterized in that the engagement gap (10) formed by the free ends of each two saddle arms (6, 7), connected to each other and together forming one saddle (5), is smaller than the external diameter of the heating element to be held.

5. Supporting mat according to claim 4, characterized in that the mat bar (2, 3) has a rounded transition into the saddle arms (6, 7) in the region of the engagement gap (10).

6. Supporting mat according to one of claims 4 or 5, characterized in that the seating opening (8) of the saddle (5) is circular and its diameter is somewhat smaller than the external diameter of the preferably tubular heating element to be held.

7. Supporting mat according to one or more of claims 1 to 6, characterized in that the saddle axis (11), alignes with the longitudinal axis of the heating element laid in the saddle (5), extends perpendicularly to the longitudinal axis of the mat bar (2, 3) formed as saddle (5).

8. Supporting mat according to claim 7, characterized in that the saddle axes (11) of the longitudinal bars (2) and/or transverse bars (3) each lie in different planes, parallel to the plane of the crossing points (4) of the longitudinal bars (2) and transverse bars (3).

9. Supporting mat according to claim 7, characterized in that the saddle axes (11) of the longitudinal bars (2) and transverse bars (3) lie in the same plane.

10. Supporting mat according to one or more of claims 7 to 9, characterized in that the saddle axes (11) of the longitudinal bars (2) and/or of the transverse bars (3) are aligned with one another.

11. Supporting mat according to one or more of claims 7 to 10, characterized in that the mat bar (2, 3) runs obliquely from the plane of the crossing points (4) to a parallel plane, in which said mat bar (2, 3) continues into the saddle arms (6, 7), and that the saddle arms (6, 7) project back out of the parallel plane, in the region of their junction one with another, to at most the plane of the crossing points (4).

12. Supporting mat according to one or more of claims 1 to 11, characterized by a reinforcing steel mat as supporting mat (1).

_Fig. 1_

_Fig. 2_

_Fig. 3_

0 046 519

34 085